# EUROPEAN PATENT APPLICATION

(11) **EP 2 371 212 A1**
(43) Date of publication of application: **05.10.2011**
(21) Application number: 11159643.3
(22) Date of filing: 24.03.2011
(51) Int. Cl.: A01K 39/01

(54) **A plant for controlled distribution of material with a substantially fluid behaviour for feeding animals**

(30) Priority: 01.04.2010 IT MI20100561; 04.11.2010 IT MI20102052
(71) Applicant: Pirovano, Paolo, 24030 Pontida (BG) (IT)
(72) Inventor: Pirovano, Paolo, 24030 Pontida (BG) (IT)
(74) Representative: Ottazzo, Marco Francesco Agostino

(57) **Abstract**

A plant (1) for distributing material with a substantially fluid behaviour for feeding animals, comprising a pipe (2) for conveying the material, elements (3, 4) for dragging the material, which are slidably housed within the conveying pipe (2), motor means (5) associated to the dragging elements (3, 4) to slide them within the conveying pipe (2), a plurality of openings (6) for the outflow of the material, which are obtained in the conveying pipe (2) and to each one of which there is associated a respective conduit (7) for supplying and containing the material and a raceway (10) which is arranged beneath the conveying pipe (2) and the conduits (7) and which is open on the top to allow animal access thereto. The outlet (9) of the conduits (7) terminates at a predefined distance from the bottom of the raceway (10), the outlet openings (6) have a diameter or an equivalent diameter comprised between 8 mm and 20 mm and the motor means (5) are adapted to move the dragging elements (3, 4) within the conveying pipe (2) at an advancement speed greater than about 45 m/min (0.75 m/sec).

## Description

The present invention refers to a plant for controlled distribution of material with a substantially fluid behaviour for feeding animals.

Regarding the present invention, the expression material with a substantially fluid behaviour is used to indicate a material in incoherent form, i.e. material in form of a plurality of small single solid elements which, together, can flow as a fluid within a conduit. Such material consist for example of cereals, particulate, powders and the like, such as for example animal feed and in particular feed for poultry farming.

Feed distribution plants constituted by a conduit for conveying the feed within which there are housed motorized elements for dragging the feed thereof have been known over the years in animal farms, in particular in free range or cage poultry farming.

The conveying conduit can be of the closed type, i.e. it can consist of a pipe. In such case, the pipe has a plurality of outlet openings for the feed which are distributed along the length thereof. Each outlet opening is in turn associated to a device for supplying and containing the feed, of the type constituted by a hopper known in the field as "feed pan".

Alternatively, the conveying conduit can be of the open type, i.e. constituted by a raceway. In such case, the feed present in the raceway is directly available for the animals over the entire line.

The motorised elements for dragging the feed are constituted by a plurality of partitions or plates integrally constrained to a rope or a chain which, through suitable motor means, is made to slide along the conveying conduit. Alternatively, the dragging motorised elements can be constituted by spirals or by augers rotated or even dragged within the conveying conduit, or even by the so-called "flat chains".

In such farms there arises the need of being able to distribute the feed more and more simultaneously and uniformly along the entire length of the plant, so as to guarantee the instantaneous supply of the same amount of feed at each point of distribution. In order to meet such need, particularly in considerably long plants, it is known to "split" the conveying conduit into several consecutive sections, by inserting along the plant numerous intermediate loading points, supplied by further and respective silos. Furthermore, it is necessary to insert further motor means along the plant with the aim of guaranteeing the actuation of the elements for dragging the feed in the respective section of the conveying conduit.

It is clear that such facility is particularly complex both at structural level, for example regarding the positioning and the overall dimension of the loading silos and the motor means as well as at management level, regarding for example controlling and coordinating the operation of the single "sections".

Furthermore, such structure also implies health problems. Actually, the means for transporting the feed, such as for example trucks or farming tractors, are forced to enter into several points for access into the area of the plant so as to fill the various silos positioned along the plant. The entry of foreign means into the farming area entails an increase of the risks of transmitting diseases, such risks increasing in cases where the means of transport supply various farms.

Additionally, a feed distribution plant of the type described above is specifically designed for use with grown adult animals, specifically poultry animals, i.e. already weaned and ready to start laying eggs up to the end of the laying cycle thereof.

Actually in many countries, mainly due to quality, health and economical reasons, animals are reared from the first day of life thereof up to the age in which they start laying eggs in given environments provided with equipment more specific for such growth period. The animals are subsequently moved to different environments, in turn provided with equipment specific for the reproduction period.

In other countries instead, especially in the less developed countries, where for example the distance and the scarcity of financial resources prevent or complicate the transport of live animals, there is the tendency of rearing the animals in the same environment right from the first day of life thereof.

A feed distribution plant like the one described above can not be easily adapted to use with chicks, or with animals born recently and considerably smaller in size with respect to the average size of adult animals. Additionally, the setting up of further supply lines, more specific for younger animals, reveals evident management and economical problems.

Thus, a purpose of the present invention is to overcome the previously mentioned drawbacks, by providing a plant for controlled distribution of material with a substantially fluid behaviour for feeding animals capable of distributing the material in a rationed, simultaneous and uniform manner along the entire length of the plant, having a particularly simple structure as well as small overall dimensions.

Another object of the invention is to provide a plant for controlled distribution of material with a substantially fluid behaviour for feeding animals capable of enabling distributing the material both in a rationed manner and in a conventional manner (so-called "ad libitum"), thus suitable both in the presence of adult animals with the need for controlled feeding and in presence of recently born animals and thus considerably small hence instead requiring supply of feed "ad libitum".

A further object of the present invention is to provide a plant, for controlled distribution of material with a substantially fluid behaviour for feeding animals that is particularly simple to install and manage.

A further object of the present invention is to provide a plant for controlled distribution of material with a substantially fluid behaviour for feeding animals capable of enabling simultaneously supplying the same amount of material over the entire length thereof.

Still another object of the present invention is to provide a plant for controlled distribution of material with a substantially fluid behaviour for feeding animals capable of enabling reducing the points for loading the material, to allow positioning thereof in defined areas of the plant limiting the area of access to the farm, hence enhancing the health conditions of the farm.

These and other objects according to the present invention are attained by providing a plant for controlled distribution of material with a substantially fluid behaviour for feeding animals as outlined in claim 1.

Further characteristics of the invention are outlined by the dependent claims, which are an integral part of the present description.

Characteristics and advantages of a plant for controlled distribution of material with a substantially fluid behaviour for feeding animals, according to the present invention, shall be more apparent from the following exemplifying and nonlimiting description with reference to the attached schematic drawings wherein:

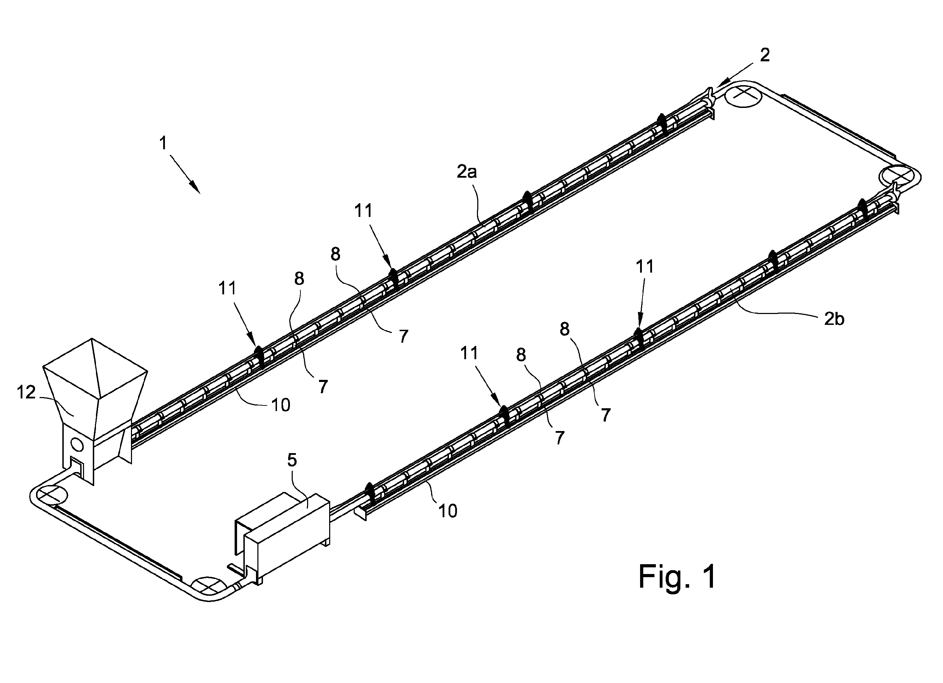

figure 1 is a perspective schematic view of a plant according to the present invention;

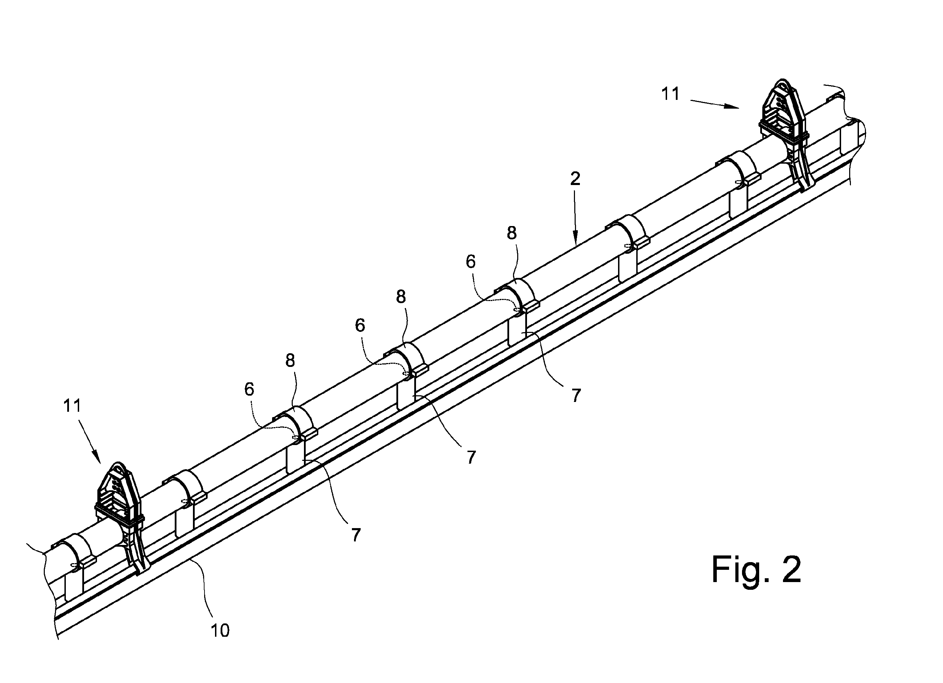

figure 2 is an enlarged scale schematic view of the conveying pipe of the plant of figure 1;
figure 3 is an enlarged scale schematic view of a detail of figure 2;

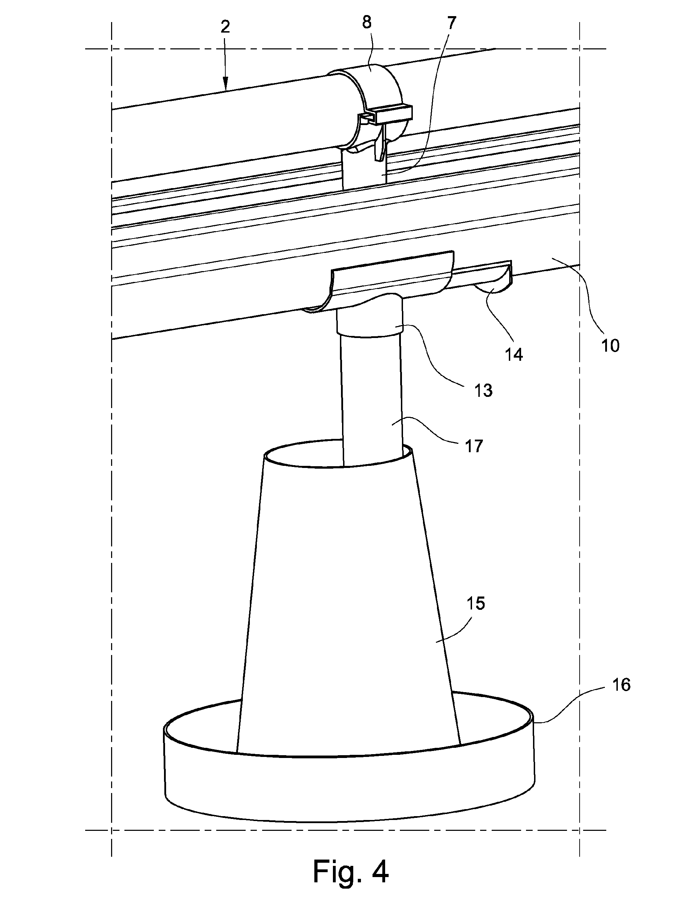

figure 4 is an enlarged scale schematic view of a section of the conveying pipe of the plant of figure 1; and

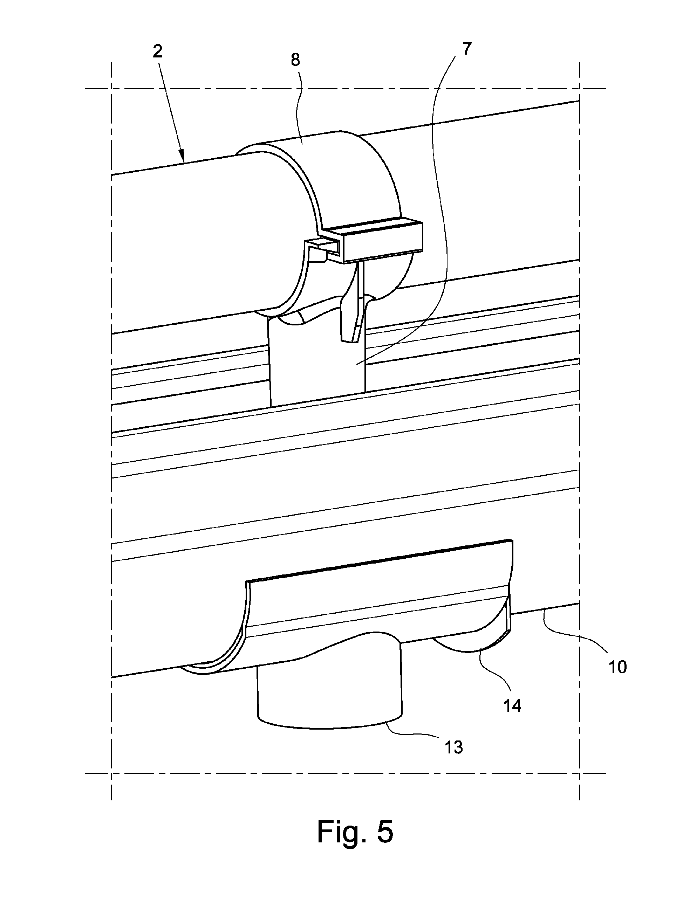

figure 5 is a further enlarged scale schematic view of a detail of figure 4.

With reference to the attached figures, a plant for distributing material with a substantially fluid behaviour for feeding animals is indicated in its entirety with 1.

The plant 1 comprises a pipe 2 for conveying the material, for example constituted by tubular elements with circular cross-section joined to each other to form a circuit.

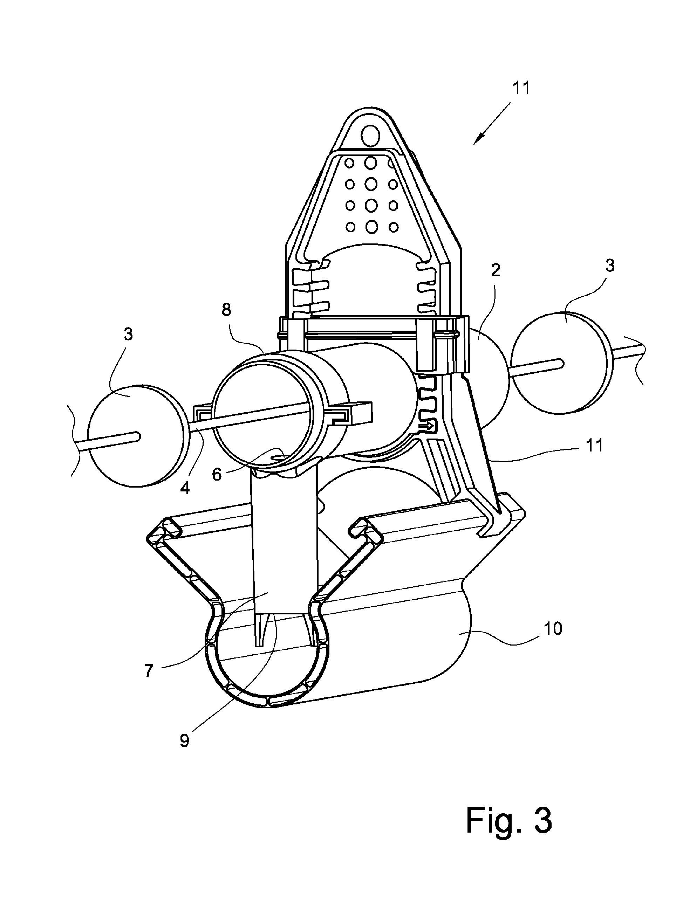

Within the pipe 2 there are slidably housed elements for dragging the material, the elements being for example constituted by partitions or plates 3 which are arranged orthogonally to the longitudinal axis of the pipe 2 and which are integrally constrained to a flexible dragging element such as a rope 4 or a chain. The latter is associated to motor means 5 which make it slide along the pipe 2 so that the plates 3, integrally constrained thereto, slide within the pipe 2 pushing the material in the advancement direction of the rope 4. For the sake of simplicity, the plates 3 and the rope 4 are represented only in figure 3.

The pipe 2 is provided along the useful distribution length thereof, for example constituted by the sections 2a and 2b, of a plurality of openings 6 for the outflow of the material which, in assembly configuration, are directed towards the ground, so that the material dragged within the pipe 2 falls through such openings 6 due to gravity.

To each opening 6 there is associated a respective supply and containment device, constituted by a conduit 7 which is arranged substantially coaxial to the opening 6.

Each conduit 7 is made integral to the pipe 2 by means of a respective coupling 8, for example of the interlocking type or any other type.

Each conduit 7 can be cylindrical, prismatic, conical or of any other shape; should it be conical-shaped, it is arranged with the lower base thereof at the respective opening 6.

Beneath the pipe 2 and the conduits 7 there is arranged a raceway 10 open on the top for access thereto by the animals.

The raceway 10 is of the continuous type and it develops parallel to the pipe 2 on which it is hanged by means of supports or U-bolts 11.

These supports 11 allow modifying the distance between the raceway 10 and the pipe 2, hence allowing providing separate supply lines for males and females. Actually, the males have a larger head with respect to the females and they can only access raceways 10 arranged at a given distance from the respective pipe 2.

The outlet 9 of the conduits 7 can be arranged at a predefined distance from the bottom of the raceway 10, so that the inner volume of the single conduits 7 is always filled with material. Alternatively, the distance between the outlet 9 of the conduits 7 and the bottom of the raceway 10 can be varied to adapt the plant 1 to different animals or feed.

It should be observed that within the raceway 10 there is no element for dragging the material, facilitating access thereto by the animals which, thus can be fed more easily and quickly. Furthermore, the absence of elements for dragging the material within the raceway 10 prevents the formation of residues.

The plant 1 further comprises a loading hopper 12 which supplies the pipe 2 with the material to be distributed.

By distributing the openings 6 with a pitch comprised between 12 cm and 60 cm, providing the openings 6 with a diameter (or equivalent diameter) comprised between 8 mm and 20 mm and actuating the plates 3, i.e. the rope 4 or chain, at an advancement speed greater than about 45 m/min (0.75 m/sec), the same amount of material is simultaneously supplied from each opening 6 independently from the length of the pipe 2 itself i.e. even over great lengths.

In a preferred embodiment, the openings 6 have a diameter in the order of the 10 mm, so as to guarantee the exit of the material therefrom, and they are distributed with a pitch in the order of the 25÷35 cm, while the plates 3, i.e. the rope 4 or chain, are actuated at an advancement speed in the order of the 70 m/min (1.67 m/sec).

Such solution, along the entire pipe 2, even with length up to 300÷350 m, sufficient for the normal poultry farming plants, allows distributing a uniform amount of material which is simultaneously supplied by all the openings 6 at substantially equivalent amounts.

Actually, due to the combination of outlet openings 6 having a very small diameter and having high advancement speed of the plates 3, alongside a considerably close distribution of the openings 6, it is possible to simultaneously supply substantially the same amount of material from all the openings 6 homogeneously along the entire distribution line.

Such effect is also facilitated by the structure and the size of the conduits 7, whose inner volume is very small and which are always filled with material during use.

Such small volume is allowed by the limited distance between the conduits 7 and between the pipe 2 and the raceway 10 without jeopardizing the feeding of the animals.

On the bottom of the raceway 10, at one or more of the conduits 7, there can be obtained one or more corresponding openings 13 provided with a closable gate 14. Thus, the material to be distributed, conveyed by the pipe 2, can be directly discharged from the conduit 7 through the underlying opening 13, so that such material can pour, through apposite feed pans 15, into containers 16 arranged on the ground and easily accessible even by animals of small size.

Preferably, each opening 13 can be provided with a conveying conduit 17 capable of conveying the material directly into the relative feed pan 15 and, from the latter, into the underlying container 16, so as to avoid dispersing the material onto the ground.

The feed pans 15 and the containers 16 are specifically dimensioned for feeding animals during the first rearing stage, i.e. for the first ten or more days of life approximately. Subsequently the feed pans 15 and the containers 16 can be easily removed, the gates 14 closed and the raceway 10 possibly lowered, so that the grown animals can comfortably feed from the raceway 10. During this period and until the animals have reached the egg laying age, given that a more controlled feeding is required, the plant 1 can operate conventionally but at a lower speed of the dragging elements 3 and 4, using for example motor means 5 capable of operating according to at least two distinct speeds.

As previously outlined, due to the fact that the raceway 10 is continuous and due to the fact that the interior volume thereof is free of elements for dragging the material (ropes, chains, spirals or augers), the animals are able to access the feed contained therein more easily. This allows reducing the daily feeding times. Furthermore, this allows eliminating the formation of residues of material within the raceway 10.

It should be observed that, due to the particular combination of outlet openings 6 having a very small diameter, small volume of the conduits 7 and high advancement speed of the plates 3, alongside a considerably close distribution of the openings 6, it is possible to simultaneously supply from all the openings 6 substantially the same amount of material along the entire pipe 2 even in case of length in the order of the 300÷350 m using a single loading hopper 12 and a single group of motor means 5.

This allows considerably simplifying both the structure of the plant 1, given that, loading silos and intermediate motor means for example are not required to be provided, as well as the installation and management of the plant 1 itself, given that controlling and coordinating the operation of several loading hoppers and/or several motor means is not required.

It should be observed that though apparently simple, the solution proposed by the Applicant is markedly different as opposed to solutions commonly applied in known poultry farming distribution plants with open raceway, where the linear element for conveying the feed flows, or a closed pipe, where there are usually provided openings having a diameter greater than 20 mm, which are distributed with pitch greater than 60 cm and are provided with high capacity "feed pans", and the ropes, chains or spirals for dragging the plates are actuated at a speed lower than 45 m/min, averagely in the order of 28÷30 m/min, loading silos and intermediate motor means further being provided for.

Characteristics and advantages of the plant subject of the present invention are clear from the description above and the attached figures.

The plant thus conceived can be subjected to various modifications and variants, all falling within the scope of protection of the invention; furthermore, all details can be replaced by technically equivalent elements. In practice, all the materials used may vary depending on the requirements.

## Claims

1. A plant (1) for distributing material with a substantially fluid behaviour for feeding animals, comprising a pipe (2) for conveying the material, elements (3, 4) for dragging said material which are slidably housed within said conveying pipe (2), motor means (5) associated to said dragging elements (3, 4) to slide them within said conveying pipe (2), a plurality of openings (6) for the outflow of said material which are obtained in said conveying pipe (2) and to each one of which there is associated a respective conduit (7) for supplying and containing said material and a raceway (10) which is arranged beneath said conveying pipe (2) and said conduits (7) and which is open on the top to allow animal access thereto, **characterised in that** the outlet (9) of said conduits (7) terminates at a predefined distance from the bottom of said raceway (10), **in that** said outlet openings (6) have a diameter or an equivalent diameter comprised between 8 mm and 20 mm and **in that** said motor means (5) are adapted to move said dragging elements (3, 4) within said conveying pipe (2) at an advancement speed greater than about 45 m/min (0.75 m/sec).

2. A plant (1) according to claim 1, **characterised in that** said raceway (10) is continuous and develops parallel to said conveying pipe (2).

3. A plant (1) according to claim 1 or 2, **characterised in that** it comprises supports (11) which hang said raceway (10) to said conveying pipe (2) at an adjustable distance therefrom.

4. A plant (1) according to one or more of the preceding claims, **characterised in that** said outlet openings (6) are distributed along said conveying conduit (2) with pitch comprised between 12 cm and 60 cm.

5. A plant (1) according to one or more of the preceding claims, **characterised in that** said diameter or equivalent diameter is in the order of 10 mm.

6. A plant (1) according to one or more of the preceding claims, **characterised in that** said advancement speed is in the order of 70 m/min (1.67 m/sec).

7. A plant (1) according to one or more of the preceding claims, **characterised in that** it comprises a hopper (12) for loading said material into said conveying pipe (2).

8. A plant (1) according to one or more of the preceding claims, **characterised in that** on the bottom of said raceway (10), at one or more of said conduits (7), there are obtained one or more corresponding openings (13) provided with a closable gate (14) for discharging the material beneath said raceway (10).

9. A plant (1) according to claim 8, **characterised in that** each opening (13) is provided with a conveying conduit (17) capable of conveying the material, through a feed pan (15), into a container (16) arranged on the ground and easily accessible even by animals of small dimensions.
